# EUROPEAN PATENT SPECIFICATION

(11) **EP 2 524 503 B1**
(45) Date of publication and mention of the grant of the patent: **03.01.2018**
(21) Application number: 11744927.2
(22) Date of filing: 21.02.2011
(51) Int. Cl.: H04N 7/24, H04N 21/6336, H04N 21/6379, H04L 29/06, H04N 21/2343, H04N 21/658, H04N 21/258, H04N 19/164, H04N 19/12, H04N 21/239

(54) **METHOD AND APPARATUS FOR TRANSMITTING VIDEO CONTENT COMPRESSED BY CODEC**
VERFAHREN UND VORRICHTUNG ZUR ÜBERTRAGUNG VON CODEC-KOMPRIMIERTEN VIDEOINHALTEN
PROCÉDÉ ET APPAREIL DESTINÉS À TRANSMETTRE UN CONTENU VIDÉO COMPRESSÉ PAR CODEC

(30) Priority: 19.02.2010 US 306189 P; 04.10.2010 KR 20100096516
(43) Date of publication of application: 21.11.2012
(73) Proprietor: Samsung Electronics Co., Ltd., Suwon-si, Gyeonggi-do, 443-742 (KR)
(72) Inventor: JUN, Hae-Young, Seoul 131-765 (KR); PARK, Sung-Bum, Seongnam-si Gyeonggi-do 463-914 (KR); PARK, Dong-Seek, Yongin-si Gyeonggi-do 446-959 (KR)
(74) Representative: Appleyard Lees IP LLP
(86) International application number: PCT/KR2011/001113
(87) International publication number: WO 2011/102685

(56) References cited:
- WO-A1-2006/019380
- WO-A2-2011/071334
- KR-A- 20050 068 093
- KR-A- 20050 096 623
- KR-B1- 100 755 714
- US-A1- 2005 091 392
- US-A1- 2008 025 414
- US-A1- 2009 154 556
- US-A1- 2009 154 556

## Description

### [Technical Field]

1. Methods and apparatuses consistent with exemplary embodiments relate to a method and apparatus for transmitting video content compressed by a codec, and more particularly, to a method and apparatus for transmitting video content compressed by using at least one of a plurality of different codecs.

### [Background Art]

2. Methods of transmitting video content between devices over a wireless network may include transmitting video content in a non-compressed form and transmitting video content compressed by a codec.

3. When video content is transmitted in a non-compressed form, the video content can be transmitted without any degradation in quality. However, since non-compressed transmission takes a long time, non-compressed transmission cannot be used when the video content is to be reproduced in real time or a bandwidth of a communication link between the devices is small.

4. As a result, for a small bandwidth communication link or real-time reproduction of video content, the video content is transmitted in a compressed form by compressing the video content using a codec. In this case, however, a receiver that receives the compressed video content needs to be notified about the type of codec used for compressing the video content.

5. WO 2006019380 describes a method for conducting a videoconference between nodes connected through a network and having disparate processing power there between. The nodes have codecs such that at least one of the nodes has more than one video codec for use thereby and other ones of the nodes, if any, have at least one video codec for use thereby. At least one of the video codecs has a disparate video compression efficiency with respect to at least another one of the codecs. The method includes the step of determining nodal constraints of each of the nodes. The nodal constraints include at least the processing power of each of the nodes. The method further includes the step of negotiating between the nodes to identify an optimal combination of video codecs that satisfy the nodal constraints.

6. US2005091392 describes a method for codec negotiation between two gateway controllers, wherein the gateway controllers manage, in a link-independent manner, a codec list with codec types which are supported by the respective media gateway, thereby avoiding ultimate disconnection of a set-up link as a result of unsupported codecs.

7. USS2009154556 describes an adaptive multimedia system for providing multimedia contents and a codec to a user terminal, and a method thereof. The adaptive multimedia system includes: a media server controller that receives profile information from an open codec player of the user terminal, and when a codec for decoding the multimedia contents does not exist in the user terminal, transmits a control message to allow the multimedia contents and the decoding codec to be transmitted together; and at least one transmission frame generator that encodes the multimedia contents through a transcoder and an encoding module according to the control message transmitted from the media server controller, generates a transmission frame including the encoded multimedia contents and the decoding codec, and transmits the generated transmission frame to the open codec player

8. WO201107133, which comprises state of the art in the sense of Article 54(3) EPC only, describes a method and apparatus for transmitting compressed video content. The method includes transmitting a codec selection request frame, the codec selection request frame including an identifier of one or more codecs to be used to compress video content and requesting approval of the use of the codec, receiving a codec selection response frame, the codec selection response frame including result information indicating whether the use of the codec is approved, and transmitting video content frames for the video content compressed by the approved codec based on the codec selection response frame. Each video content frame includes frame type information indicating a type of compression applied to the video content included in the video content frame.

9. US 2008/0025414 describes a Bluetooth® moving picture stream transmission terminal for moving picture data stream transmission through Bluetooth® to a moving picture output device. The Bluetooth® terminal provides the moving picture output device with the optimized streaming service by either acquiring the transcoding reference variable according to decoding function included in the moving picture output device when the Audio Video Distribution Transport Protocol (AVDTP) channel of the moving picture output device is opened, or acquiring the transcoding reference variable by using the newly defined transcoding reference variable request/response message after opening the AVDTP channel, and by setting an encoding environment with reference to the acquired transcoding reference variable, and encoding the corresponding moving picture and transmitting stream of the encoded moving picture through Bluetooth®.

### [Disclosure]

### [Technical Solution]

10. One or more exemplary embodiments provide a method and apparatus for transmitting video content compressed by at least one of a plurality of different codecs.

### [Advantageous Effects]

11. According to an exemplary embodiment, one codec selection request frame includes an identifier of at least one codec to be used for compression of the video content and one codec selection response frame includes at least one approval information, so that even when the first device transmits a plurality of compressed video contents to the second device, the first device may transmit video contents compressed by a plurality of different codecs by transmitting one codec selection request frame and receiving one codec selection response frame.

### [Description of Drawings]

12. The above and other aspects will become more apparent by describing in detail exemplary embodiments with reference to the attached drawings in which:
13. FIG. 1 is a flowchart illustrating a method of transmitting video content, according to an exemplary embodiment;
14. FIG. 2 is a flowchart illustrating a method of transmitting video content, according to another exemplary embodiment;
15. FIG. 3 is a diagram showing a structure of a codec selection request frame according to an exemplary embodiment;
16. FIG. 4 is a diagram showing a structure of a codec selection request frame according to another exemplary embodiment;
17. FIG. 5 is a diagram showing a structure of a vendor codec identifier field according to an exemplary embodiment;
18. FIG. 6 is a diagram showing a structure of a related codec selection response frame;
19. FIG. 7 is a diagram showing a structure of a related codec selection response frame;
20. FIG. 8 is a diagram showing a structure of a codec selection response frame according to an exemplary embodiment;
21. FIG. 9 is a diagram showing a structure of a compressed video content frame according to an exemplary embodiment;
22. FIG. 10 is a diagram showing a frame type field according to an exemplary embodiment;
23. FIG. 11 is a diagram showing a structure of a capability request frame according to an exemplary embodiment;
24. FIG. 12 is a diagram showing a compression type field according to an exemplary embodiment;
25. FIG. 13 is a diagram showing a structure of a capability response frame according to an exemplary embodiment; and
26. FIG. 14 is a block diagram of an apparatus for transmitting video contents, according to an exemplary embodiment.

### [Best Mode]

27. One or more exemplary embodiments provide a method and apparatus for transmitting video content compressed by at least one of a plurality of different codecs.

28. According to the present invention there is provided an apparatus and method as set forth in the appended claims. Other features of the invention will be apparent from the dependent claims, and the description which follows.

### [Mode for Invention]

29. Hereinafter, exemplary embodiments will be described in detail with reference to the accompanying drawings.

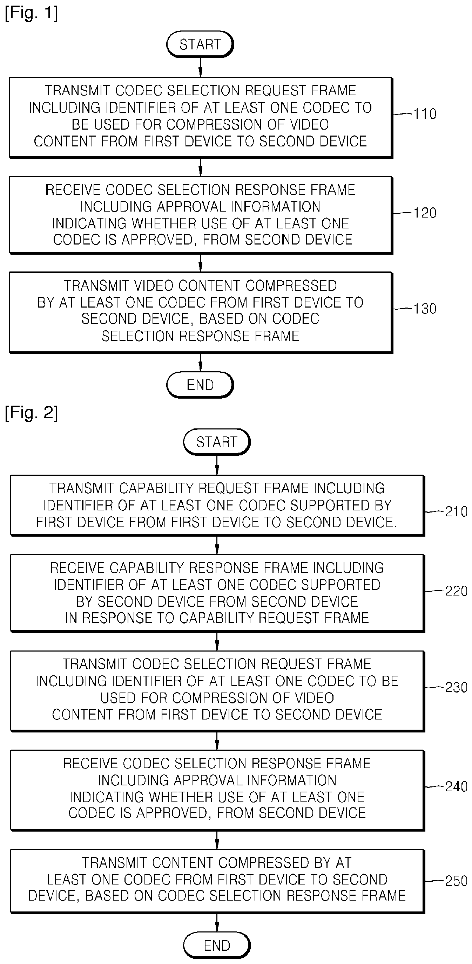

30. FIG. 1 is a flowchart illustrating a method of transmitting video content, according to an exemplary embodiment.

31. In operation 110, a first device transmits a codec selection request frame, which includes an identifier of at least one codec to be used for compressing video content and requests approval to use the at least one codec, to a second device.

32. The first device includes a device for transmitting the video content, and the second device includes a device for receiving the video content.

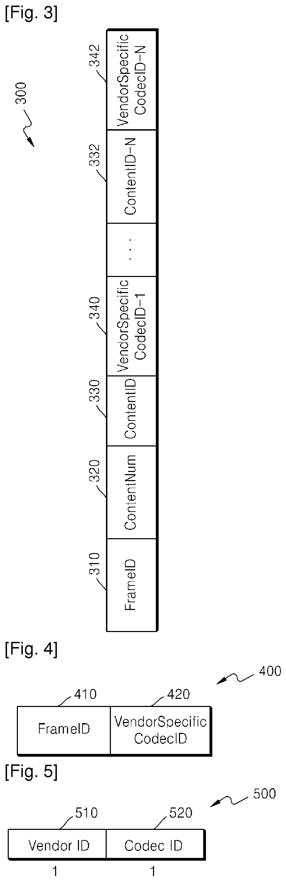

33. A structure of the codec selection request frame according to an exemplary embodiment will be described below with reference to FIGS. 3 and 4.

34. In operation 120, the first device receives a codec selection response frame, which includes approval information indicating whether the use of the at least one codec is approved, from the second device.

35. If the codec selection request frame transmitted in operation 110 includes a plurality of codec identifiers, the codec selection response frame may also include a plurality of approval information, each of which may indicate approval or rejection for each of the plurality of codec identifiers.

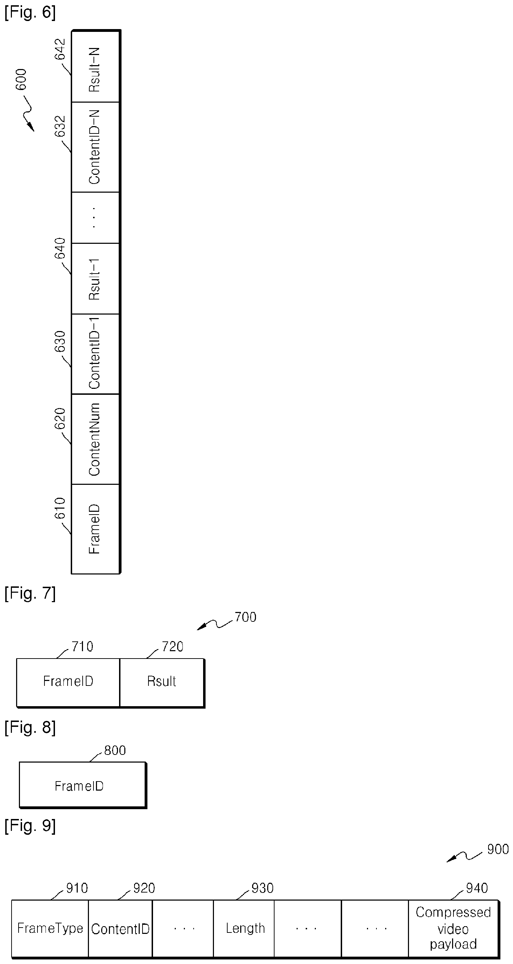

36. A structure of the codec selection response frame according to an exemplary embodiment will be described below with reference to FIGS. 6 through 8.

37. In operation 130, the first device transmits video content compressed by at least one codec to the second device, based on the codec selection response frame.

38. For example, if approval of the use of a codec A and a codec B for transmitting two pieces of video content, namely, first video content and second video content, is requested through the codec selection request frame, and the use of the codec A and the codec B for the two video contents is approved through the codec selection response frame, the first device compresses the first video content by using the codec A and compresses the second video content by using the codec B, and transmits the compressed first and second video contents.

39. As such, according to an exemplary embodiment, one codec selection request frame includes an identifier of at least one codec to be used for compression of the video content and one codec selection response frame includes at least one approval information, so that even when the first device transmits a plurality of compressed video contents to the second device, the first device may transmit video contents compressed by a plurality of different codecs by transmitting one codec selection request frame and receiving one codec selection response frame.

40. Also, the compressed video content is transmitted in the form of a frame, and a structure of the compressed video content frame according to an exemplary embodiment will be described below with reference to FIG. 9.

41. FIG. 2 is a flowchart illustrating a method of transmitting video content, according to another exemplary embodiment.

42. In operation 210, the first device transmits a capability request frame, which includes an identifier of at least one codec supported by the first device and requests information about a capability of the second device, to the second device.

43. If the first device supports a plurality of codecs, a plurality of codec identifiers may be included in the capability request frame and the plurality of codecs may be provided by different codec vendors.

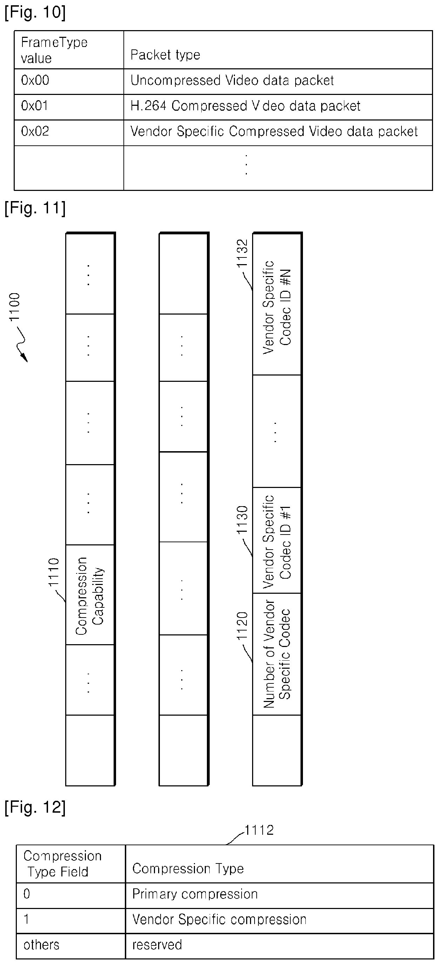

44. A structure of the capability request frame according to an exemplary embodiment will be described below with reference to FIG. 11.

45. In operation 220, the first device receives a capability response frame, which includes an identifier of at least one codec supported by the second device, from the second device in response to the capability request frame.

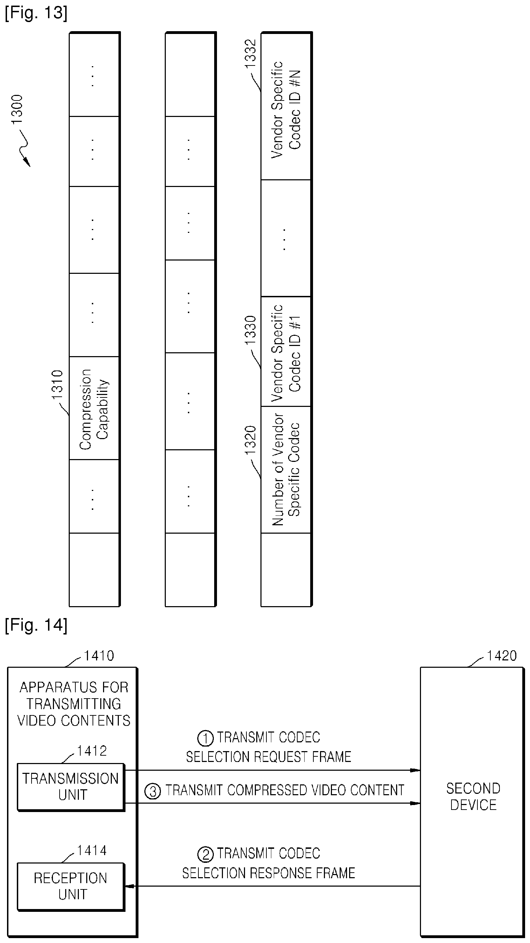

46. A structure of the capability response frame according to an exemplary embodiment will be described below with reference to FIG. 13.

47. In operation 230, the first device transmits a codec selection request frame, which includes an identifier of at least one codec to be used for compression of video content and requests approval for the use of the at least one codec, to the second device.

48. The identifier of the at least one codec included in the codec selection request frame may be generated based on the capability response frame received in operation 220. For example, the identifier of the at least one codec included in the codec selection request frame may include at least one codec supported by the second device based on the capability response frame.

49. In operation 240, the first device receives a codec selection response frame, which includes approval information indicating whether the use of the at least one codec is approved, from the second device.

50. In operation 250, the first device transmits content compressed by at least one codec to the second device, based on the codec selection response frame.

51. FIG. 3 is a diagram for describing a structure of a codec selection request frame 300 according to an exemplary embodiment.

52. Referring to FIG. 3, the codec selection request frame 300 may include a frame identifier field 310, a content number field 320, content identifier fields 330 through 332, and vendor codec identifier fields 340 through 342.

53. The frame identifier field 310 indicates that the codec selection request frame 300 is a frame for requesting selection of a codec to be applied to video content to be transmitted by the first device.

54. The content number field 320 indicates the amount of video content to be transmitted by the first device.

55. The content identifier fields 330 through 332 indicate identifiers of video content to be transmitted by the first device. In FIG. 3, N content identifier fields 330 through 332 corresponding to N video contents are shown.

56. The vendor codec identifier fields 340 through 342 indicate identifiers of codecs to be used for compression of video content to be transmitted by the first device. In FIG. 3, N vendor codec identifier fields 340 through 342 corresponding to N codecs are shown. The N codec vendor identifier fields 340 through 342 may include identifiers of N different types of codecs.

57. FIG. 4 is a diagram showing a structure of a codec selection request frame 400 according to another exemplary embodiment.

58. Referring to FIG. 4, the codec selection request frame 400 may include a frame identifier field 410 and a vendor codec identifier field 420.

59. The frame identifier field 410 indicates that the codec selection request frame 400 is a frame for requesting selection of a codec to be applied to video content to be transmitted by the first device.

60. The vendor codec identifier field 420 indicates an identifier of a codec to be used for compression of video content to be transmitted by the first device.

61. For example, when the codec selection request frame 400 includes the single vendor codec identifier field 420, all video content following transmission of the codec selection request frame 400 are to be compressed by the codec corresponding to the identifier recorded in the vendor codec identifier field 420 and then transmitted.

62. The identifier of the codec recorded in the vendor codec identifier field 420 may have a format defined by a codec vendor.

63. Hereinafter, a structure of the vendor codec identifier field 420 according to an exemplary embodiment will be described with reference to FIG. 5.

64. FIG. 5 is a diagram for describing a structure of a vendor codec identifier field 500 according to an exemplary embodiment.

65. Referring to FIG. 5, the vendor codec identifier field 500 according to the exemplary embodiment includes a vendor identifier field 510 and a codec identifier field 520.

66. The vendor identifier field 510 indicates an identifier of a codec vendor providing a codec.

67. The codec identifier field 520 indicates an identifier of a codec having a format defined by the codec vendor.

68. FIG. 6 is a diagram for describing a structure of a related codec selection response frame 600.

69. Referring to FIG. 6, the codec selection response frame 600 may include a frame identifier field 610, a content number field 620, content identifier fields 630 through 632, and approval information fields 640 through 642.

70. The frame identifier field 610 indicates that the codec selection response frame 600 is a response frame with respect to the codec selection request frame 300.

71. The content number field 620 indicates the number of video contents to be received by the second device.

72. The content identifier fields 630 through 632 indicate identifiers of video contents to be received by the second device.

73. The approval information fields 640 through 642 indicate approval information regarding the use of codecs corresponding to the identifiers of the codecs included in the codec selection request frame 300. Some of the approval information fields 640 through 642 may indicate information approving the use of the codecs corresponding to the identifiers of the codecs included in the codec selection request frame 300, and some of the approval information fields 640 through 642 may indicate information rejecting the use of the codecs corresponding to the identifiers of the codecs included in the codec selection request frame 300.

74. FIG. 7 is a diagram for describing a structure of a related codec selection response frame 400.

75. Referring to FIG. 7, the codec selection response frame 700 may include a frame identifier field 710 and an approval information field 720.

76. The frame identifier field 710 indicates that the codec selection response frame 700 is a response frame with respect to the codec selection request frame 300.

77. The approval information field 720 indicates approval information regarding the use of at least one codec corresponding to the identifier of the at least one codec included in the codec selection request frame 300. In other words, the approval information field 720 shown in FIG. 7 may indicate whether the use of all codecs corresponding to identifiers of all the codecs included in the codec selection request frame 300 is approved.

78. FIG. 8 is a diagram for describing a structure of a codec selection response frame 800 according to an exemplary embodiment.

79. Referring to FIG. 8, the codec selection response frame includes only a frame identifier field 800.

80. In FIG. 8, the frame identifier field 800 indicates that the codec selection response frame is a response frame with respect to the codec selection request frame 300. If the first device receives the codec selection response frame including only the frame identifier field 800, the first device may determine that the use of all codecs corresponding to identifiers of all the codecs included in the codec selection request frame 300 corresponding to the codec selection response frame is approved.

81. FIG. 9 is a diagram for describing a structure of a compressed video content frame 900 according to an exemplary embodiment.

82. Referring to FIG. 9, the compressed video content frame 900 includes a frame type field 910, a content identifier field 920, a length field 930, and a compression video payload field 940.

83. The frame type field 910 indicates that a type of the compressed video content frame 900 is a compressed video content type.

84. Values of the frame type field 910 will be described below with reference to FIG. 10.

85. The content identifier field 920 indicates a content identifier of the video content included in the video content frame 900.

86. The length field 930 indicates the length of the video content frame 900.

87. The compression video payload field 940 includes the video content compressed by a predetermined codec.

88. FIG. 10 is a diagram showing the frame type field 910 according to an exemplary embodiment.

89. Referring to FIG. 10, when the frame type field 910 has a value of 0x00, it means that a frame including the frame type field 910 is a non-compressed video data frame; when the frame type field 910 has a value of 0x01, it means that the frame including the frame type field 910 is a video data frame compressed by an H.264 codec; and when the frame type field 910 has a value of 0x02, it means that the frame including the frame type field 910 is a video frame compressed by a codec designated by a codec vendor.

90. FIG. 11 is a diagram showing a structure of a capability request frame 1100 according to an exemplary embodiment.

91. Referring to FIG. 11, the capability request frame 1100 may include a codec capability field 1110, a vendor codec number field 1120, and vendor codec identifier fields 1130 through 1132.

92. The codec capability field 1110 indicates whether the first device supports a video content compression capability. Here, the codec capability field 1110 may further include a compression type field (not shown) indicating a compression type, which will be described below with reference to FIG. 12.

93. The vendor codec number field 1120 indicates the number of codecs supported by the first device.

94. The vendor codec identifier fields 1130 through 1132 indicate an identifier of at least one codec supported by the first device. In FIG. 11, N vendor codec identifier fields 1130 through 1132 corresponding to N codecs are shown.

95. FIG. 12 is a diagram for describing a compression type field 1112 according to an embodiment of the present invention.

96. Referring to FIG. 12, the compression type field 1112 indicates that when the compression type field 1112 has a value of 0, it means that video content is compressed by using a first compression technique; and when the compression type field 1112 has a value of 1, it means that a video content is compressed by using a compression technique designated by a vendor. Here, for example, the first compression technique may be an H.264 technique.

97. FIG. 13 is a diagram showing a structure of a capability response frame 1300 according to an exemplary embodiment.

98. Referring to FIG. 13, the capability response frame 1300 may include a codec capability field 1310, a vendor codec number field 1320, and vendor codec identifier fields 1330 through 1332. The capability response frame 1300 has the same structure as the capability request frame 1100 shown in FIG. 11.

99. The codec capability field 1310 indicates whether the second device supports a video content compression capability.

100. The vendor codec number field 1320 indicates the number of codecs supported by the second device.

101. The vendor codec identifier fields 1330 through 1332 indicate an identifier of at least one codec supported by the second device. In FIG. 13, N vendor codec identifier fields 1330 through 1332 corresponding to N codecs are shown.

102. FIG. 14 is a block diagram of an apparatus 1410 for transmitting video contents, according to an exemplary embodiment.

103. Referring to FIG. 14, the apparatus 1410 may include a transmission unit 1412 and a reception unit 1414. In an exemplary embodiment, the apparatus 1410 is mounted on a first device (not shown). However, in another exemplary embodiment, the apparatus 1410 may be the first device. For convenience of explanation, a second device 1420 is further shown in FIG. 14.

104. The transmission unit 1412 transmits a codec selection request frame, including an identifier of at least one codec to be used for compression of video content, to the second device 1420.

105. The reception unit 1414 receives a codec selection response frame, including at least one approval information indicating whether the use of the at least one codec is approved, from the second device 1420.

106. The transmission unit 1412, upon receiving the codec selection response frame, transmits video content compressed by at least one codec to the second device 1420, based on the codec selection response frame.

107. As described above, the transmission unit 1412 may further transmit a capability request frame, which includes an identifier of at least one codec supported by the first device and requests information about a capability of the second device 1420, to the second device 1420. The reception unit 1414 may further receive a capability response frame, which includes an identifier of at least one codec supported by the second device 1420 in response to the capability request frame, from the second device 1420.

108. The transmission unit 1412 may further transmit first device capability information to the second device 1420, and the reception unit 1414 may further receive the identifier of the at least one codec supported by the second device from the second device 1420.

109. The methods according to the exemplary embodiments above can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, etc. The computer-readable recording medium can also be distributed over network-coupled computer systems so that the computer-readable code is stored and executed in a distributed fashion.

110. While exemplary embodiments have been particularly shown and described, it will be understood by one of ordinary skill in the art that various changes in form and details may be made therein without departing from the scope of the present invention as defined by the following claims. The exemplary embodiments should be considered in descriptive sense only and not for purposes of limitation. Therefore, the scope of the inventive concept is defined not by the detailed description but by the appended claims, and all differences within the scope will be construed as being included in the claims.

## Claims

1. A method of transmitting video content by a first device, the method comprising:
transmitting, from a first device, a codec selection request frame to a second device, the codec selection request frame comprising a frame identifier field, and further comprising a first identifier that identifies a first codec to be used to compress a first video content of the video content and a second codec to be used to compress a second video content of the video content (110);
receiving, at the first device, a codec selection response frame from the second device, the codec selection response frame provided as only the frame identifier field to indicate that the codec selection response frame corresponds to the codec selection request frame, the frame identifier field thereby indicates that the use of all codecs corresponding to identifiers included in the codec selection request frame corresponding to the codec selection response frame is approved; and
transmitting, from the first device, the first video content compressed by the first codec and the second video content compressed by the second codec, to the second device, based on the codec selection response frame (130)

2. The method of claim 1, wherein the codec selection request frame further comprises at least one of a frame identifier indicating that the codec selection request frame is a frame for requesting selection of a codec to be applied to video content to be transmitted by the first device, content number information indicating the number N of video contents to be transmitted by the first device, wherein N is at least 2, and content identifiers indicating the N video contents to be transmitted by the first device.

3. The method of claim 2, wherein the codec selection request frame further comprises a vendor codec identifier indicating N different codecs.

4. An apparatus that is arranged to transmit video content, the apparatus (1410) comprising:
a transmitter (1412) arranged to transmit a codec selection request frame to a second device, the codec selection request frame comprising a frame identifier field, and further comprising a first identifier that identifies a first codec to be used to compress a first video content of the video content and a second codec to be used to compress a second video content of the video content; and
a receiver (1414) arranged to receive a codec selection response frame from the second device (1420), the codec selection response frame includes only the frame identifier field to indicate that the codec selection response frame corresponds to the codec selection request frame, the frame identifier field thereby indicates that the use of all codecs corresponding to identifiers included in the codec selection request corresponding to the codec selection response frame is approved,
wherein the transmitter (1412) is arranged to transmit the first video content compressed by the first codec and the second video content compressed by the second codec to the second device based on the codec selection response frame.

5. The apparatus of claim 4, wherein the codec selection request frame further comprises at least one of a frame identifier indicating that the codec selection request frame is a frame for requesting selection of a codec to be applied to video content to be transmitted by the first device, content number information indicating the number N of video contents to be transmitted by the first device, wherein N is at least 2, and content identifiers indicating the N of video contents to be transmitted by the first device.

6. The apparatus of claim 5, wherein the codec selection request frame further comprises a vendor codec identifier indicating N different codecs

7. A computer-readable recording medium having embodied thereon a computer program, which when executed by a computer, performs the method of claim 1 or claim 2.

## Patentansprüche

1. Verfahren zum Senden von Videoinhalt mittels eines ersten Geräts, wobei das Verfahren Folgendes umfasst:
Senden eines Codecauswahlanforderungsrahmens von einem ersten Gerät an ein zweites Gerät, wobei der Codecauswahlanforderungsrahmen ein Rahmenkennzeichnungsfeld umfasst, und ferner umfassend eine erste Kennzeichnung, die einen ersten Codec, der zum Komprimieren eines ersten Videoinhalts des Videoinhalts zu verwenden ist, und einen zweiten Codec, der zum Komprimieren eines zweiten Videoinhalts des Videoinhalts zu verwenden ist, (110), identifiziert;
Empfangen eines Codecauswahlantwortrahmens an dem ersten Gerät von dem zweiten Gerät, wobei der Codecauswahlantwortrahmen lediglich als das Rahmenkennzeichnungsfeld bereitgestellt wird zur Angabe, dass der Codecauswahlantwortrahmen dem Codecauswahlanforderungsrahmen entspricht, womit das Rahmenkennzeichnungsfeld angibt, dass die Verwendung aller Codecs, die Kennzeichnungen entsprechen, die in dem Codecauswahlanforderungsrahmen entsprechend dem Codecauswahlantwortrahmen enthalten sind, bewilligt ist; und
Senden des ersten Videoinhalts, der durch den ersten Codec komprimiert wird, und des zweiten Videoinhalts, der durch den zweiten Codec komprimiert wird, von dem ersten Gerät an das zweite Gerät auf der Grundlage des Codecauswahlantwortrahmens (130).

2. Verfahren nach Anspruch 1, wobei der Codecauswahlanforderungsrahmen ferner mindestens eines der Folgenden umfasst: eine Rahmenkennzeichnung, die angibt, dass der Codecauswahlanforderungsrahmen ein Rahmen zum Anfordern einer Auswahl eines Codecs ist, der auf von dem ersten Gerät zu sendenden Videoinhalt anzuwenden ist, Inhaltsanzahlinformationen, die die Anzahl N von von dem ersten Gerät zu sendenden Videoinhalten angeben, wobei N mindestens 2 ist, und Inhaltskennzeichnungen, die die N von dem ersten Gerät zu sendenden Videoinhalte angeben.

3. Verfahren nach Anspruch 2, wobei der Codecauswahlanforderungsrahmen ferner eine Verkäufer-Codeckennzeichnung umfasst, die N unterschiedliche Codecs angibt.

4. Vorrichtung, die dazu angeordnet ist, Videoinhalt zu senden, wobei die Vorrichtung (1410) Folgendes umfasst:
einen Sender (1412), der dazu angeordnet ist, einen Codecauswahlanforderungsrahmen an ein zweites Gerät zu senden, wobei der Codecauswahlanforderungsrahmen ein Rahmenkennzeichnungsfeld umfasst, und ferner umfassend eine erste Kennzeichnung, die einen ersten Codec, der zum Komprimieren eines ersten Videoinhalts des Videoinhalts zu verwenden ist, und einen zweiten Codec, der zum Komprimieren eines zweiten Videoinhalts des Videoinhalts zu verwenden ist, identifiziert; und
einen Empfänger (1414), der dazu angeordnet ist, einen Codecauswahlantwortrahmen von dem zweiten Gerät (1420) zu empfangen, wobei der Codecauswahlantwortrahmen lediglich das Rahmenkennzeichnungsfeld beinhaltet zur Angabe, dass der Codecauswahlantwortrahmen dem Codecauswahlanforderungsrahmen entspricht, womit das Rahmenkennzeichnungsfeld angibt, dass die Verwendung aller Codecs, die Kennzeichnungen entsprechen, die in dem Codecauswahlanforderungsrahmen entsprechend dem Codecauswahlantwortrahmen enthalten sind, bewilligt ist;
wobei der Sender (1412) zum Senden des ersten Videoinhalts, der durch den ersten Codec komprimiert wird, und des zweiten Videoinhalts, der durch den zweiten Codec komprimiert wird, an das zweite Gerät auf der Grundlage des Codecauswahlantwortrahmens angeordnet ist.

5. Vorrichtung nach Anspruch 4, wobei der Codecauswahlanforderungsrahmen ferner mindestens eines der Folgenden umfasst: eine Rahmenkennzeichnung, die angibt, dass der Codecauswahlanforderungsrahmen ein Rahmen zum Anfordern einer Auswahl eines Codecs ist, der auf von dem ersten Gerät zu sendenden Videoinhalt anzuwenden ist, Inhaltsanzahlinformationen, die die Anzahl N von von dem ersten Gerät zu sendenden Videoinhalten angeben, wobei N mindestens 2 ist, und Inhaltskennzeichnungen, die die N von dem ersten Gerät zu sendenden Videoinhalte angeben.

6. Vorrichtung nach Anspruch 5, wobei der Codecauswahlanforderungsrahmen ferner eine Verkäufer-Codeckennzeichnung umfasst, die N unterschiedliche Codecs angibt.

7. Computerlesbares Aufzeichnungsmedium, auf dem ein Computerprogramm ausgebildet ist, welches bei Ausführung durch einen Computer das Verfahren nach Anspruch 1 oder Anspruch 2 durchführt.

## Revendications

1. Procédé de transmission de contenu vidéo par un premier dispositif, le procédé comprenant :
la transmission, depuis un premier dispositif, d'une trame de requête de sélection de codecs à un deuxième dispositif, la trame de requête de sélection de codecs comprenant un champ d'identifiant de trame, et comprenant en outre un premier identifiant qui identifie un premier codec devant être utilisé pour compresser un premier contenu vidéo du contenu vidéo et un deuxième codec devant être utilisé pour compresser un deuxième contenu vidéo du contenu vidéo (110) ;
la réception, au niveau du premier dispositif, d'une trame de réponse de sélection de codecs provenant du deuxième dispositif, la trame de réponse de sélection de codecs fournie sous la forme uniquement du champ d'identifiant de trame pour indiquer que la trame de réponse de sélection de codecs correspond à la trame de requête de sélection de codecs, le champ d'identifiant de trame indique de ce fait que l'utilisation de tous les codecs correspondant à des identifiants contenus dans la trame de requête de sélection de codecs correspondant à la trame de réponse de sélection de codecs est approuvée ; et
la transmission, depuis le premier dispositif, du premier contenu vidéo compressé par le premier codec et du deuxième contenu vidéo compressé par le deuxième codec, au deuxième dispositif, sur la base de la trame de réponse de sélection de codecs (130).

2. Procédé de la revendication 1, dans lequel la trame de requête de sélection de codecs comprend en outre au moins un élément parmi un identifiant de trame indiquant que la trame de requête de sélection de codecs est une trame destinée à demander la sélection d'un codec devant être appliqué à du contenu vidéo devant être transmis par le premier dispositif, une information de nombre de contenus indiquant le nombre N de contenus vidéo devant être transmis par le premier dispositif, N valant au moins 2, et des identifiants de contenus indiquant les N contenus vidéo devant être transmis par le premier dispositif.

3. Procédé de la revendication 2, dans lequel la trame de requête de sélection de codecs comprend en outre un identifiant de codec de fournisseur indiquant N codecs différents.

4. Appareil qui est agencé pour transmettre du contenu vidéo, l'appareil (1410) comprenant :
un transmetteur (1412) agencé pour transmettre une trame de requête de sélection de codecs à un deuxième dispositif, la trame de requête de sélection de codecs comprenant un champ d'identifiant de trame, et comprenant en outre un premier identifiant qui identifie un premier codec devant être utilisé pour compresser un premier contenu vidéo du contenu vidéo et un deuxième codec devant être utilisé pour compresser un deuxième contenu vidéo du contenu vidéo ; et
un récepteur (1414) agencé pour recevoir une trame de réponse de sélection de codecs provenant du deuxième dispositif (1420), la trame de réponse de sélection de codecs comporte uniquement le champ d'identifiant de trame pour indiquer que la trame de réponse de sélection de codecs correspond à la trame de requête de sélection de codecs, le champ d'identifiant de trame indique de ce fait que l'utilisation de tous les codecs correspondant à des identifiants contenus dans la requête de sélection de codecs correspondant à la trame de réponse de sélection de codecs est approuvée,
dans lequel le transmetteur (1412) est agencé pour transmettre le premier contenu vidéo compressé par le premier codec et le deuxième contenu vidéo compressé par le deuxième codec au deuxième dispositif sur la base de la trame de réponse de sélection de codecs.

5. Appareil de la revendication 4, dans lequel la trame de requête de sélection de codecs comprend en outre au moins un élément parmi un identifiant de trame indiquant que la trame de requête de sélection de codecs est une trame destinée à demander la sélection d'un codec devant être appliqué à du contenu vidéo devant être transmis par le premier dispositif, une information de nombre de contenus indiquant le nombre N de contenus vidéo devant être transmis par le premier dispositif, N valant au moins 2, et des identifiants de contenus indiquant les N contenus vidéo devant être transmis par le premier dispositif.

6. Appareil de la revendication 5, dans lequel la trame de requête de sélection de codecs comprend en outre un identifiant de codec de fournisseur indiquant N codecs différents.

7. Support d'enregistrement lisible par ordinateur ayant, matérialisé sur celui-ci, un programme informatique qui, lorsqu'il est exécuté par un ordinateur, effectue le procédé de la revendication 1 ou la revendication 2.
